Europäisches Patentamt

**European Patent Office**

**Office européen des brevets**

(11) Numéro de publication: **0 027 156**
**A1**

## (12) DEMANDE DE BREVET EUROPEEN

(21) Numéro de dépôt: **79400734.4**

(22) Date de dépôt: **11.10.79**

(51) Int. Cl.³: **G 21 G 1/12**
**H 01 S 3/00**

(43) Date de publication de la demande:
**22.04.81 Bulletin 81/16**

(84) Etats Contractants Désignés:
**AT BE CH DE GB IT LU NL SE**

(71) Demandeur: **Romani, Lucien**
**67 rue Boileau**
**F-75016 Paris(FR)**

(72) Inventeur: **Romani, Lucien**
**67 rue Boileau**
**F-75016 Paris(FR)**

(74) Mandataire: **Hagel, Francis**
**Cabinet Robert Bloch 39, avenue de Friedland**
**F-75008 Paris(FR)**

(54) **Perfectionnement aux générateurs d'énergie.**

(57) Procédé de génération d'énergie, caractérisé par le fait qu'on bombarde une cible (22) avec un rayon d'un laser (21), de façon à désintégrer des neutrons contenus dans les noyaux de la cible (22) par les photons de ce rayon laser.

EP 0 027 156 A1

-1-

## Perfectionnement aux générateurs d'énergie.

Les générateurs d'énergie actuellement utilisés sont basés, soit sur des transformations au niveau des molécules
(combustion, fermentation), soit sur des transformations au
niveau des noyaux atomiques (fission nucléaire).

Les sources d'énergie ainsi mises en jeu sont, dans l'ensemble de l'industrie mondiale, toutes bornées en puissance
pour diverses raisons. Certaines, provenant de combustibles
fossiles non renouvelables, doivent être ménagées; d'autres, utilisant des substances radioactives, laissent des
déchets malfaisants; la plupart, en outre, produisent des
nuisances telles que la pollution physico-chimique de l'atmosphère ou des eaux naturelles par poussières, gaz, déchets
flottants, chaleur , etc.

Cette limitation des sources actuelles ne peut être palliée
que partiellement et à grands frais par certaines sources
d'énergie non polluantes que la nature met à notre disposition (soleil, marées, chutes d'eau, fleuves, vent ou autres).

Comme, d'autre part, la demande d'énergie croît à peu près
exponentiellement sous l'effet combiné des développements
démographique et industriel, il devient urgent de disposer
d'une nouvelle source non polluante qui soit, ou bien indéfiniment renouvelable, ou bien pratiquement illimitée.

Le demandeur a montré (théorie générale) que les particules élémentaires pourraient être considérées comme des anneaux-tourbillons se déplaçant dans un fluide, appelé éther, continu, homogène et isotrope, remplissant l'espace. En particulier, le neutron ($n^o$) est constitué de trois anneaux-tourbillons, deux de ces anneaux constituant un photon ($\gamma$) et le troisième étant un anti-neutrino ($\overline{\nu}_e$).

Or il résulte de ce modèle et de la théorie de la radioactivité $\beta^-$ que ce neutron est un édifice fragile.

Précisément, l'invention prévoit de générer de l'énergie en désintégrant des neutrons contenus dans les noyaux d'une cible, solide ou liquide, en bombardant cette cible par les photons d'un rayon laser.

Chaque fois que le rayon laser rencontre l'axe de révolution commun aux trois anneaux-tourbillons d'un neutron de cette cible au voisinage de son antineutrino ($\overline{\nu}_e$), le neutron est désintégré et la majeure partie de son énergie potentielle (938 MeV) est emportée par un photon ($\gamma$) du neutron lui-même, après départ/de son anti-neutrino; cette énergie est susceptible d'être absorbée et convertie en chaleur dans un milieu approprié.

Etant donné la densité énorme de l'énergie ainsi libérée, il conviendra de prendre des précautions contre l'autodestruction de l'appareil producteur et surtout de se prémunir contre les risques de réaction en chaîne. Pratiquement, il suffira de constituer le milieu absorbant par de l'hydrogène pur, sec et ne contenant que de faibles quantités de deutérium. Un tel milieu ne comporte pratiquement pas de neutrons, ce qui supprime tout risque de réaction en chaîne. Quant à l'enveloppe du ballon d'hydrogène, elle n'absorbera qu'une faible partie des photons $\gamma_2$ en raison de leur pouvoir pénétrant et on pourra s'arranger, grâce à divers artifices, pour que les impacts soient répartis sur une surface non négligeable.

Dans un mode de réalisation, donné à titre d'exemple et nullement limitatif, le laser agira sur une cible faite d'un monocristal disposé de manière à présenter une surface supérieure plane et horizontale que les tirs du laser puissent raser de très près. On choisira de préférence, pour constituer la cible, un corps cristallisant dans un système cubique, possédant un excès impair de neutrons et présentant un isotope naturel doué de radioactivité $\beta^-$, par exemple un cristal de potassium. Toutefois, on peut envisager l'emploi de cristaux liquides orientés par un champ magnétique et au besoin refroidis. La plus petite dimension de la cible sera orientée parallèlement au rayon; dans les deux autres directions de l'espace, surtout dans la direction parallèle au déplacement, le cristal doit être aussi grand que possible, compte tenu du fait qu'il ne doit pas présenter de défauts graves tels que des dislocations (les lacunes sont tolérables).

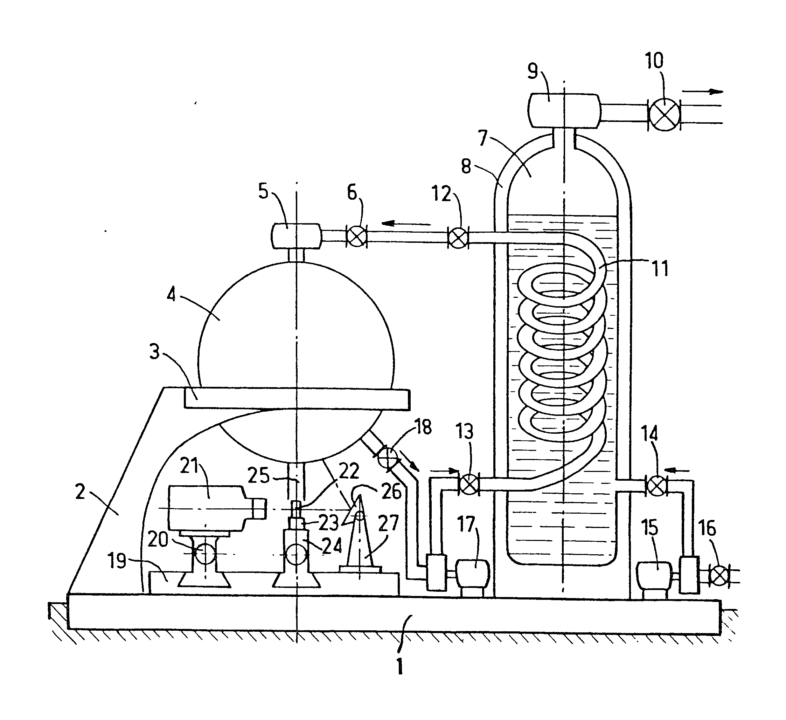

A titre nullement limitatif, on a représenté schématiquement selon la figure unique du dessin annexé une installation pour la mise en oeuvre du procédé selon l'invention.

Un massif 1, partiellement enterré, supporte une console 2 qui soutient le berceau 3. Sur ce dernier, repose un absorbeur 4 constitué d'un réservoir sphérique d'hydrogène sous pression, en acier réfractaire ou en acier inoxydable au chrome-nickel, soudé. Le réservoir est surmonté d'un groupe de contrôle-sécurité 5 (manomètre, soupape, etc.) recevant, par la vanne 6, l'hydrogène ayant cédé ses calories dans l'échangeur 7. Cet échangeur, de même construction que l'absorbeur mais cylindrique à fonds chaudronnés et revêtu de la jaquette calorifuge 8, utilise les calories apportées par l'hydrogène pour vaporiser de l'eau ou tout autre liquide. La vapeur s'échappe à travers le groupe sécurité-contrôle 9 raccordé au circuit d'utilisation (quelconque, non représenté) par la vanne d'isolement 10. L'échange se fait grâce au serpentin 11 branché entre les vannes 12 et 13. Le retour d'eau condensée est contrôlé par les vannes 14 et 16 encadrant le groupe moto-pompe alimentaire 15. Un autre groupe moto-pompe 17 alimente l'échangeur. Il est lui-même alimenté en hydrogène par l'absorbeur 4 à travers la vanne 18.

Un banc optique 19 porte le support 20 du laser 21. Le support 20 possède trois degrés de liberté, à savoir :

a) un degré de liberté en rotation autour d'un axe horizontal (normal au plan de la figure). Son amplitude est faible, de l'ordre du degré. Il n'est utilisé qu'au réglage initial du laser en site;

b) un degré de liberté autour d'un axe vertical passant par l'axe du laser qui se trouve ainsi monté en tourelle et réglable en azimut. L'amplitude est du même ordre que pour le précédent degré de liberté; l'usage est le même;

c) un degré de liberté de translation horizontale transversale (selon une perpendiculaire au plan de la figure). La course, de l'ordre du décimètre, est parcourue pendant le fonctionnement grâce à un mécanisme de "pas à pas" (bien connu et non représenté). L'avance est d'un pas à chaque tir du laser.

Le cristal cible 22 est serré dans une presse 23, elle-même montée télescopiquement sur le support de cible 24. Ce dernier comporte trois degrés de liberté, à savoir :

a) le degré de translation vertical de la presse qui permet de régler la hauteur de la cible;

b) le même degré de liberté en site que celui du support 20, ce qui permet de rendre initialement parallèles un axe de cristal-cible avec l'axe de tir;

c) le même degré de liberté de translation horizontale que celui du cristal 20. En outre, un générateur ultra-sonore (non représenté) imprime à la cible une oscillation harmonique horizontale parallèle à ladite translation (c) avec une fréquence et une amplitude aussi élevées que possible

(au moins $10^5$ Hz et 10 Å).

A chaque tir du laser, la cible se déplace, comme le laser lui-même, au moyen d'un "pas à pas" similaire à celui du support 20.

Si l'on désigne par $\underline{d}$ la dimension de la maille cristalline (supposée cubique), le pas du déplacement du laser doit être k d et celui du déplacement de la cible k'd, les nombres positifs k et k' vérifiant la relation :

$$k' - k = nd$$

avec $\underline{n}$ entier positif et k', k, n aussi petits que possible mécaniquement.

Il est facile de voir que grâce à ces dispositions :
a) au cours d'une seule course du laser on peut faire un grand nombre de tirs prenant d'enfilade des séries de mailles cristallines;
b) l'oscillation de la cible amène pendant chaque tir un certain nombre d'axes neutroniques à croiser l'axe de tir;
c) les impacts des photons $\gamma_2$ sur l'absorbeur 4 sont répartis sur une surface ayant pour dimensions la course du laser et l'épaisseur de la cible.

Du fait de l'agitation thermique, le phénomène présente un caractère partiellement aléatoire, ce qui empêche ou tout au moins atténue les effets stroboscopiques qui pourraient être fâcheux en rendant les rendements quantiques soit trop faibles, soit exagérés, selon les conditions initiales.

Le caractère en partie aléatoire du processus empêche une destruction régulière du cristal dont la partie supérieure devra être éventuellement repolie après chaque course. Le canon 25 interposé entre la cible et l'absorbeur 24 permet de limiter les inconvénients éventuels des effets produits sur l'air par des photons $\gamma_2$, ceci par des moyens connus.

Les rayons du laser dont l'énergie n'est pas négligeable peuvent être renvoyés sur l'absorbeur 4 au moyen du miroir 26 porté par la colonnette 27. Le miroir 26 peut également être utilisé lors des réglages initiaux mettant en oeuvre des méthodes optiques connues au moyen d'appareillages existants (non représentés).

La régulation est assurée par une boucle cybernétique dont le pick-up est constitué par des thermocouples placés dans l'absorbeur 4 au voisinage de la zone d'impact. Cette boucle (non représentée) commande le laser; elle interrompt son fonctionnement chaque fois que la température de sécurité est atteinte et le provoque au contraire si la température est en dessous de sa valeur de consigne inférieure. Bien entendu, un contrôle manuel doit être superposé à la boucle.

Lorsqu'il fonctionne, le laser tire à intervalles réguliers grâce à un montage à relaxation (connu et non représenté).

En utilisant un laser rubis ayant pour caractéristiques :
$\lambda = 6943 \overset{o}{A}$
durée d'impulsion : $10^{-6}$ s
puissance lumineuse : 1 GW
et en bombardant la cible à la fréquence de 1 tir de laser par seconde, on peut évaluer comme suit l'énergie susceptible d'être produite et la comparer à l'énergie dépensée qui est ici de 1 MW (en admettant un rendement du laser de 0,1 %).

Energie pour un photon =
$$6.624 \times 10^{-27} \times \frac{3 \times 10^{10}}{6.943 \times 10^{-5}} = 2.862 \times 10^{-12} \text{ ergs}$$

Energie pour un tir = $10^{+10}$ ergs (1 K J)

Nombre de photons par seconde = $3.5 \times 10^{21}$

Rendement quantique = $10^{-2}$ (hypothesis)

Nombre de désintégrations neutroniques par seconde :
$3.5 \times 10^{19}$

Energie par neutron 938 MeV

Différentes pertes  (estimation)        38 MeV

Energie nette         900 MeV

x $1.59 \times 10^{-13} = 1.43 \times 10^{-10}$

Puissance :  $1.43 \times 10^{-10} \times 3.5 \times 10^{19} = 5 \times 10^9$ W  = 5 GW

<u>5000 fois l'énergie dépensée</u>

(environ 2000 fois après conversion thermoélectrique).

Revendications de brevet

1. Procédé de génération d'énergie, caractérisé par le fait qu'on bombarde une cible avec un rayon laser de façon à désintégrer des neutrons contenus dans les noyaux de cette cible par les photons de ce rayon laser.

2. Procédé selon la revendication 1, dans lequel on déplace la cible en translation transversalement au rayon laser.

3. Procédé selon la revendication 2, dans lequel on déplace le laser en translation parallèlement à la cible, mais avec une amplitude légèrement différente de celle de la cible.

4. Procédé selon l'une des revendications 1 à 3, dans lequel on absorbe les photons produits par désintégration des neutrons dans de l'hydrogène pure sous pression.

5. Procédé selon l'une des revendications 1 à 4, dans lequel la cible est un monocristal, par exemple un cristal de potassium

**0027156**

Numéro de la demande

Office européen
des brevets

EP 79 40 0734

**RAPPORT DE RECHERCHE EUROPEENNE**

| Catégorie | Citation du document avec indication, en cas de besoin, des parties pertinentes | Revendication concernée |
|---|---|---|
| A | US - A - 3 899 696 (FLETCHER) <br> * Résumé * | 1 |
| A | US - A - 3 967 215 (BELLAK) <br> * Résumé * | 1 |
| A | GB - A - 1 424 509 (PEDRIK) <br> * Revendication unique * | 1 |

**DOCUMENTS CONSIDERES COMME PERTINENTS**

**CLASSEMENT DE LA DEMANDE (Int. Cl. 3)**

G 21 G 1/12
H 01 S 3/00

**DOMAINES TECHNIQUES RECHERCHES (Int. Cl. 3)**

G 21 G 1/12
H 01 S 3/00
H 05 H 1/12

—

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

| X | Le present rapport de recherche a été etabli pour toutes les revendications |

| Lieu de la recherche | Date d'achevement de la recherche | Examinateur |
|---|---|---|
| La Haye | 11-06-1980 | NICOLAS |

OEB Form 1503.1  06.78